(19) **Europäisches Patentamt / European Patent Office / Office européen des brevets**

(11) **EP 4 587 398 B1**

(12) **FASCICULE DE BREVET EUROPEEN**

(45) Date de publication et mention de la délivrance du brevet:
**20.05.2026 Bulletin 2026/21**

(21) Numéro de dépôt: **23768846.0**

(22) Date de dépôt: **11.09.2023**

(51) Classification Internationale des Brevets (IPC):
**A47G 1/02** *(2006.01)* **C03C 17/32** *(2006.01)*
**C03C 17/38** *(2006.01)*

(52) Classification Coopérative des Brevets (CPC):
**C03C 17/38; C03C 17/32; C03C 17/3663;**
A47G 1/02; C03C 2217/72

(86) Numéro de dépôt international:
**PCT/EP2023/074897**

(87) Numéro de publication internationale:
**WO 2024/056602 (21.03.2024 Gazette 2024/12)**

(54) **PROCÉDÉ DE REVÊTEMENT D'UN PANNEAU DE VERRE FEUILLETÉ ET PANNEAU DE VERRE FEUILLETÉ REVÊTU**

VERFAHREN ZUR BESCHICHTUNG EINER VERBUNDGLASSCHEIBE UND BESCHICHTETE VERBUNDGLASSCHEIBE

METHOD FOR COATING LAMINATED GLASS PANEL AND COATED LAMINATED GLASS PANEL

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.09.2022 FR 2209325**

(43) Date de publication de la demande:
**23.07.2025 Bulletin 2025/30**

(73) Titulaire: **AURYS INDUSTRIES**
**50500 Carentan-les-Marais (FR)**

(72) Inventeurs:
• **BOU OBEID, Samir**
**60270 Gouvieux (FR)**
• **MOLLARD, Franck**
**14400 Bayeux (FR)**

(74) Mandataire: **Fidal Innovation**
**4-6 avenue d'Alsace**
**92400 Courbevoie (FR)**

(56) Documents cités:
**WO-A1-2012/141155 WO-A1-2020/141453**
**WO-A2-2019/064275 US-A- 3 740 281**
**US-A1- 2002 148 255 US-A1- 2006 115 651**
**US-A1- 2006 191 625**

• **XP093135891**
• **MAX EL KACEMI: ""Can you put window film on dual pane windows?"", 16 June 2020 (2020-06-16), XP002808977, Retrieved from the Internet <URL:https://www.rcwindowfilms.com/can-you-put-window-film-on-dual-pane-windows/> [retrieved on 20230403]**

**Description**

**DOMAINE DE L'INVENTION**

La présente invention se rapporte à un procédé de fabrication d'un verre revêtu d'une couche décorative et à un tel verre.

Plus précisément, l'invention se rapporte à un procédé de revêtement d'un panneau de verre feuilleté par une couche décorative étant une couche réfléchissante ainsi qu'au panneau de verre feuilleté revêtu ainsi obtenu.

**ARRIÈRE-PLAN TECHNOLOGIQUE**

Dans le domaine des verres revêtus d'une couche décorative, deux types de couches décoratives sont particulièrement appréciés : les couches réfléchissant la lumière de sorte que le verre a l'aspect d'un miroir et les couches décoratives de type « laque », formées à partir d'une peinture riche en résine et présentant un aspect dit tendu.

Ainsi, un miroir consiste classiquement en un verre monolithique d'épaisseur typiquement comprise entre 2 et 8 mm recouvert d'une couche d'argent qui lui confère son pouvoir réfléchissant. L'épaisseur de la couche d'argent est typiquement de l'ordre de quelques dizaines de nanomètres et sa masse surfacique est en général d'au moins $700\,mg/m^2$.

Pour améliorer la résistance chimique et mécanique de la couche d'argent, celle-ci peut être recouverte d'un vernis de protection, le plus souvent d'une épaisseur de l'ordre de plusieurs micromètres.

Un verre laqué consiste quant à lui classiquement en un verre monolithique, d'une épaisseur typiquement comprise entre 2 et 12 mm recouvert d'une couche de peinture de décoration de type « laque » - le plus souvent d'une épaisseur de l'ordre de plusieurs micromètres - qui lui confère l'aspect esthétique souhaité et qui possède des caractéristiques de résistance chimique et mécanique satisfaisantes.

Ces procédés de revêtement d'un verre monolithique, s'ils sont satisfaisants d'un point de vue esthétique, ne permettent pas d'obtenir des propriétés de résistance mécanique suffisantes pour certaines applications, notamment dans le domaine du bâtiment.

La sécurité des verres monolithiques revêtus obtenus par les procédés classiques peut être améliorée au moyen d'un film adhésif anti-éclat placé au dos des verres et qui retient les morceaux de verre en cas de bris, les performances mécaniques d'une telle structure restant limitées puisque le risque de casse n'est pas ou est peu modifié par la présence du film anti-éclat.

Dans le domaine du verre, il est aussi connu de tremper le verre pour améliorer ses propriétés mécaniques. Le verre trempé ne peut pas être redécoupé après trempe. Si l'on envisageait un revêtement décoratif d'un verre trempé, on serait donc limité par la forme de la pièce de verre trempée avant revêtement. On comprend que ce choix est très limitant pour des applications dans le bâtiment telles que des portes de placard, des tables, des surfaces murales, qui sont souvent à réaliser sur mesure.

Dans le domaine du verre, il est encore connu de feuilleter le verre pour améliorer ses propriétés mécaniques. Le verre feuilleté est un assemblage de feuilles de verre et d'intercalaires de nature plastique notamment sous forme de film, généralement en polybutyral de vinyle (PVB) ou en éthylène-acétate de vinyle (EVA). La présence du matériau intercalaire permet d'accroître la résistance mécanique au bris et d'éviter la formation d'éclats.

Divers procédés ont été décrits qui permettent d'obtenir des miroirs en verre feuilleté ou des verres feuilletés laqués, la couche décorative se trouvant intercalée, ou équivalemment placée en sandwich, entre deux feuilles de verre.

Notamment, le document GB224160 décrit un procédé d'obtention d'un miroir en verre feuilleté dans lequel :

- un revêtement réfléchissant est déposé sur une première feuille de verre,
- puis une seconde feuille de verre est collée sur la première feuille au moyen d'une colle telle que le butyral de polyvinyle (PVB)

le revêtement réfléchissant se trouvant intercalé entre les deux feuilles de verre.

Partant d'un tel procédé, il n'est pas possible de simplement inverser l'ordre des composants pour positionner le revêtement réfléchissant sur une face externe du produit final. En effet, d'une part le revêtement réfléchissant (ou tout autre revêtement décoratif) ainsi positionné se trouverait alors mécaniquement endommagé par les rouleaux de calandrage ou de transport utilisés pour l'assemblage des deux feuilles, et d'autre part la phase d'autoclavage à l'échelle industrielle présente un risque de détérioration des revêtements des couches d'un panneau donné et de collage des panneaux de verre les uns avec les autres.

De plus, les défauts optiques du miroir formé par le procédé de GB224160 sont déterminés par ceux de la couche de verre sur laquelle le revêtement réfléchissant est déposé.

De la même façon, WO2009/081077 décrit un verre feuilleté laqué dans lequel une couche de laque est placée en sandwich entre deux feuilles de verre, l'ensemble étant soumis à un traitement thermique sous pression pour assurer la liaison entre les feuilles de verre. Un tel procédé nécessite d'utiliser une laque qui résiste au traitement thermique sous pression, ce qui limite le choix de couleurs. De surcroît, la bonne adhésion du PVB peut être affectée notamment s'agissant des vernis avec solvants aqueux. Ce qui présente des risques futurs de délamination du produit. Il est connu de coller des films réfléchissants sur la face externe d'un verre feuilleté pour obtenir un effet miroir. La société Luminis Film commercialise des films effet miroir sous le nom Miroir-200-x: https://en.luminis-films.com/_telechargement/luminis/categorie/ficheTechnique/MIROIR-200x_2.pdf?v=1.

L'invention vise ainsi à proposer un procédé de revêtement d'un panneau de verre feuilleté par une couche décorative permettant d'obtenir un miroir de verre feuilleté présentant une résistance aux chocs et/ou à la perforation et une aptitude à la rétention d'éclats au moins aussi bonnes que celles obtenues par les procédés de l'art antérieur et des propriétés optiques et décoratives améliorées par rapport aux procédés de l'art antérieur.

## RÉSUMÉ DE L'INVENTION

Ainsi, l'invention se rapporte à un procédé de revêtement d'un panneau de verre feuilleté comprenant :

- on fournit un panneau de verre feuilleté à revêtir comprenant au moins deux feuilles de verre et dans lequel au moins deux feuilles de verre successives sont assemblées au moyen d'un matériau intercalaire polymère formant après assemblage une couche intercalaire, le panneau de verre feuilleté à revêtir présentant au moins une face supérieure à revêtir ;
- on fournit un matériau décoratif fluide ;
- on incorpore un durcisseur chimique ou un catalyseur de réticulation dans le matériau décoratif fluide dans un rapport $P\_cata$ entre la masse de durcisseur chimique ou de catalyseur de réticulation et de la masse de matériau décoratif à l'état fluide déterminé ;
- on forme au moins une couche de revêtement décoratif par application du matériau décoratif à l'état fluide dans lequel est incorporé le durcisseur chimique ou le catalyseur de réticulation sur la face supérieure du panneau de verre feuilleté à revêtir ;
- on sèche la couche de revêtement décoratif par chauffage du panneau de verre feuilleté ainsi recouvert au moyen d'un dispositif de séchage dont une température de consigne est supérieure ou égale à 100°C et inférieure à 140°C.

procédé dans lequel l'au moins une couche de revêtement décoratif est constituée d'une couche de matériau réfléchissant de manière à former un miroir et d'une ou plusieurs couches de vernis protecteur, l'épaisseur de la couche de matériau réfléchissant correspondant à une masse surfacique d'argent supérieure à la norme de 700 mg/m$^2$.

Selon un mode de réalisation, le procédé peut comprendre une étape dans laquelle la durée de chauffage ($t\_chauff$) du panneau de verre feuilleté à la température de consigne ($T\_ext$) et/ou le rapport $P\_cata$ de la masse de durcisseur chimique ou de catalyseur de réticulation et de la masse de matériau décoratif à l'état fluide lors de l'incorporation est déterminé comme étant fonction de ladite température de consigne ($T\_ext$).

Grâce à ces dispositions, il est possible de fabriquer de manière industrialisée des panneaux de verre feuilletés revêtus sans bullage ni jaunissement du matériau intercalaire à partir de panneaux de verre feuilletés déjà assemblés.

Selon un mode de réalisation du procédé de revêtement d'un panneau de verre feuilleté, le matériau intercalaire polymère peut être choisi parmi le polybutyral de vinyle, l'éthylène-acétate de vinyle, un polymère ionoplast, le polyuréthane thermoplastique et une résine de coulée.

Ces différents matériaux intercalaires polymères présentent des caractéristiques différentes en termes d'indice de réfraction, de résistance mécanique et d'hydrophobicité, ce qui permet de moduler les propriétés optiques et/ou mécaniques et/ou de résistance à l'humidité du panneau de verre feuilleté revêtu en fonction de son usage futur.

Le procédé de revêtement peut aussi permettre aussi de fabriquer un panneau de verre de type miroir de bilan carbone réduit sur la durée de vie du produit. En effet, le verre feuilleté est de l'ordre de cinq fois plus résistant et de l'ordre de cent fois plus rigide que le verre monolithique. On peut donc s'attendre à ce que le renouvellement des miroirs en verre feuilleté soit moins fréquent que celui des miroirs de l'art antérieur. Selon le procédé de revêtement d'un panneau de verre feuilleté, au moins une couche de revêtement décoratif est constituée d'une couche de matériau réfléchissant et d'une ou plusieurs couches de vernis protecteur

Cette disposition permet notamment, à partir d'un même procédé générique, de former des panneaux de verre feuilleté de type miroir

Selon un mode de réalisation du procédé de revêtement d'un panneau de verre feuilleté, le rapport $P\_cata$ de la masse de durcisseur chimique ou de catalyseur de réticulation et de la masse de matériau décoratif à l'état fluide est supérieur à 0,1%.

Une telle proportion de durcisseur chimique permet notamment de limiter la température de surface maximale atteinte par le panneau de verre, de sorte que le matériau polymère intercalaire ne bulle pas ni ne jaunit et que la réticulation de la couche de revêtement décoratif est satisfaisante avec un temps de séchage à cette température de surface maximale limité et notamment acceptable dans un procédé industriel.

Selon un mode de réalisation du procédé de revêtement d'un panneau de verre feuilleté :

- si la température de consigne du dispositif de séchage (T_ext) est choisie dans la gamme [100°C, 120°C], ladite durée de de chauffage (t_chauff) dans le dispositif de séchage est supérieure ou égale à 7,5 minutes et ledit rapport P_cata est choisi dans la gamme [0,1% ; 5%] ,
- et si la température de consigne du dispositif de séchage (T_ext) est choisie dans la gamme [120°C, 140°C], ladite durée de de chauffage (t_chauff) dans le dispositif de séchage est inférieure ou égale à 7,5 minutes et supérieure ou égale à 3 minutes et ledit rapport P_cata est choisi dans la gamme [0,1% ; 5%].

Ces gammes de paramètres permettent d'obtenir un panneau de verre feuilleté revêtu sans bullage ni jaunissement du matériau intercalaire polymère, avec une réticulation de la couche de revêtement décoratif particulièrement satisfaisante et dans des durées de réalisation tout-à-fait compatibles avec une utilisation à l'échelle industrielle et automatisée. Selon un mode de réalisation du procédé de revêtement d'un panneau de verre feuilleté, le durcisseur chimique ou le catalyseur de réticulation peut être choisi parmi les catalyseurs acides et optionnellement parmi l'acide fluorhydrique, l'acide phosphorique et l'acide paratoluènesulfonique.

Ces durcisseurs chimiques et catalyseurs de réticulation présentent entre autres l'avantage de permettre un abaissement de la température de réticulation suffisant pour éviter les problèmes de bullage.

L'invention porte aussi sur un panneau de verre feuilleté comprenant au moins deux feuilles de verre et dans lequel au moins deux feuilles de verre successives sont assemblées au moyen d'un matériau intercalaire polymère, le panneau de verre feuilleté présentant une première face (11a1) extérieure dite face (11a1) supérieure et une deuxième face (11b1) extérieure dite face (11b1) inférieure, le panneau étant caractérisé en ce que la face (11a1) supérieure du panneau de verre feuilleté est revêtue d'au moins une couche de revêtement décoratif (13) formée au moins en partie à partir d'un matériau décoratif fluide organique appliqué sur la face (11a1) supérieure du panneau de verre feuilletée après que les au moins deux feuilles de verre successives aient été assemblées au moyen du matériau intercalaire polymère et dans lequel l'au moins une couche de revêtement décoratif est constituée d'une couche de matériau réfléchissant de manière à former un miroir et d'une ou plusieurs couches de vernis protecteur, l'épaisseur de la couche de matériau réfléchissant correspondant à une masse surfacique d'argent supérieure à la norme de 700 mg/m$^2$.

Selon un mode de réalisation, le matériau intercalaire polymère ne présente pas de défaut de bullage observable à l'œil nu et la couche de revêtement décoratif résiste à au moins vingt allers-retours à un test de chiffonnage effectué en frottant la surface de la couche de revêtement décoratif sur une distance déterminée à l'aide d'un chiffon imbibé d'un solvant pour la couche de revêtement décoratif.

Un tel panneau de verre peut être obtenu par le procédé suivant l'invention et présente grâce au feuilletage une bonne résistance mécanique et à la rétention d'éclats, ainsi que des propriétés optiques et/ou décoratives améliorées par rapport aux panneaux de verre revêtus de l'art antérieur.

Selon un mode de réalisation du panneau de verre feuilleté, la couche de revêtement décoratif résiste à au moins deux cents allers-retours au test de chiffonnage. Une telle résistance convient pour la majorité des applications du panneau de verre feuilleté revêtu, notamment dans le domaine du bâtiment ou celui de l'ameublement.

Selon un mode de réalisation du panneau de verre feuilleté, le matériau intercalaire polymère est teinté.

Il est ainsi possible d'obtenir un miroir teinté dont la teinte est contrôlée au moyen de celle du matériau intercalaire polymère, dont la coloration est facile à mettre en œuvre et peut se faire dans une large palette de couleurs.

Selon un mode de réalisation du panneau de verre feuilleté, des moyens de chauffage sont incorporés dans le matériau intercalaire polymère ou dans au moins l'une des au moins deux feuilles de verre.

L'invention porte enfin sur l'utilisation dudit panneau de verre feuilleté dans le domaine du bâtiment ou de l'ameublement.

## BRÈVE DESCRIPTION DES DESSINS

Des modes de réalisation de l'invention seront décrits ci-dessous par référence aux dessins, décrits brièvement ci-dessous :

[Fig. 1] représente une vue de côté d'un panneau de verre feuilleté revêtu suivant l'invention.

[Fig. 2a] est une photo d'un panneau de verre feuilleté revêtu par argenture et dépôt d'une couche de vernis protecteur, l'ensemble étant chauffé à 170°C pendant 2 minutes, suivant un procédé de l'art antérieur, sur laquelle on observe le bullage du matériau intercalaire polymère.

[Fig. 2b] est une photo du panneau de verre feuilleté revêtu de la Fig. 2a, juste après dépôt de la couche de vernis protecteur et juste avant l'étape de chauffage suivant le procédé de l'art antérieur.

[Fig. 3] représente le profil de température suivi par la surface externe de la couche de revêtement décoratif, suivi au moyen de six thermocouples répartis sur cette surface pendant le séchage de la couche de revêtement décoratif suivant un procédé de l'art antérieur dans le cas du panneau de verre feuilleté revêtu obtenu à la Fig. 2a.

[Fig. 4] représente les profils de température suivis par la surface externe de la couche de revêtement décoratif, suivi au moyen de six thermocouples répartis sur cette surface pendant le séchage de la couche de revêtement décoratif suivant les six profils de chauffage testés pour obtenir les résultats de la table 1.

[Fig. 5] représente l'évolution théorique de la température T de la feuille de verre supérieure d'un panneau de verre feuilleté revêtu dans le cadre d'un modèle thermique simplifié.

Sur les dessins, des références identiques désignent des objets identiques ou similaires.

## DESCRIPTION DÉTAILLÉE

L'invention concerne un procédé de revêtement d'un panneau de verre comprenant :

- on fournit un panneau de verre feuilleté à revêtir comprenant au moins deux feuilles de verre et dans lequel au moins deux feuilles de verre successives sont assemblées au moyen d'un matériau intercalaire polymère formant après assemblage une couche intercalaire 12, le panneau de verre feuilleté à revêtir présentant au moins une face supérieure 11a1;
- on fournit un matériau décoratif à l'état fluide ;
- on incorpore un durcisseur chimique ou un catalyseur de réticulation dans le matériau décoratif à l'état fluide dans un rapport P_cata entre la masse de durcisseur chimique ou de catalyseur de réticulation et de la masse de matériau décoratif à l'état fluide déterminé;
- on forme au moins une couche de revêtement décoratif 13 par application du matériau décoratif à l'état fluide dans lequel est incorporé le durcisseur chimique ou le catalyseur de réticulation sur la face supérieure 11a1 du panneau de verre feuilleté à revêtir ;
- on sèche la couche de revêtement décoratif par chauffage du panneau de verre feuilleté ainsi recouvert au moyen d'un dispositif de séchage dont une température de consigne T_ext est supérieure ou égale à 100°C et inférieure à 140°C. procédé dans lequel l'au moins une couche de revêtement décoratif est constituée d'une couche de matériau réfléchissant de manière à former un miroir et d'une ou plusieurs couches de vernis protecteur, l'épaisseur de la couche de matériau réfléchissant correspondant à une masse surfacique d'argent supérieure à la norme de 700 mg/m$^2$.

La durée de chauffage t_chauff du panneau de verre feuilleté à cette température de consigne T_ext et le rapport P_cata de la masse de durcisseur chimique ou de catalyseur de réticulation et de la masse de matériau décoratif à l'état fluide lors de l'incorporation peuvent être choisis en fonction de la température de consigne T_ext.

Le rapport P_cata est de préférence exprimé en pourcentage de la masse du matériau décoratif à l'état fluide.

Le panneau de verre feuilleté à revêtir comprend donc au moins deux feuilles de verre parmi lesquelles on définit une feuille de verre supérieure 11a et une feuille de verre inférieure 11b. Tout type de verre plat (ou éventuellement bombé par les procédés de bombage connus de l'homme du métier, lorsqu'il s'agit de revêtir des surfaces courbes) peut être employé pour chacune des feuilles de verre.

Chaque feuille de verre est par définition monolithique.

Dans un mode de réalisation, une ou plusieurs des au moins deux feuilles de verre sont produites par le procédé « float » permettant d'obtenir une feuille de verre plane et lisse avec une très bonne précision, ou par des procédés d'étirage ou de laminage.

Dans un mode de réalisation, au moins une ou toutes les feuilles de verre sont trempées.

Dans un mode de réalisation, la feuille de verre supérieure 11a, dont une face sera au final revêtue d'au moins une couche de revêtement décoratif 13 à l'issue du procédé selon l'invention, n'est pas en verre trempé. Le verre trempé peut en effet présenter des microdéformations susceptibles d'altérer les qualités décoratives du revêtement, notamment dans le cas où ce revêtement est obtenu par un procédé d'argenture.

Dans le cas où aucune des feuilles de verre n'est trempée, le panneau de verre feuilleté présente l'avantage de pouvoir être redécoupé aux dimensions souhaitées et/ou pour déclassement des bords si leurs caractéristiques ne sont pas satisfaisantes à l'issue du procédé.

Aucune limitation ne s'impose sur les dimensions des au moins deux feuilles de verre, mis à part celles liées au procédé de fabrication de chacune des feuilles de verre et au procédé d'assemblage.

Notamment, l'épaisseur d'une feuille de verre peut être comprise entre 2 et 12 mm (millimètres), voire plus, en fonction de l'utilisation finale du panneau de verre feuilleté revêtu. Par exemple, une épaisseur de 2 mm à 6 mm, voire de 2 mm à 5 mm ou de 2 mm à 4 mm ou encore de 2 mm à 3 mm, et en particulier égale à 2 mm, 3 mm, 4 mm, 5 mm ou 6 mm, pour une ou plusieurs des au moins deux feuilles de verre pourra être envisagée.

Les au moins deux feuilles de verre peuvent avoir deux à deux des épaisseurs et/ou des compositions identiques ou non.

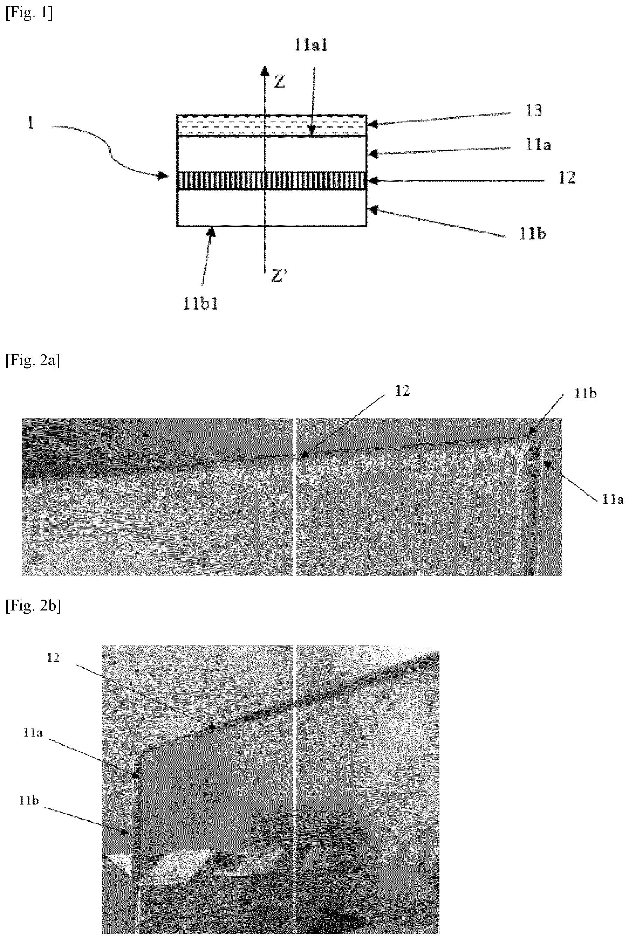

Les au moins deux feuilles de verre sont superposées les unes aux autres suivant une direction d'empilement (Z'Z) et assemblées deux-à-deux au moyen d'au moins un matériau intercalaire polymère, de sorte qu'après assemblage, au moins une couche intercalaire 12 est intercalée (ou équivalemment prise en sandwich) entre au moins deux feuilles de verre successives, comme représenté sur la figure 1.

Quel que soit le nombre de feuilles de verre superposées (deux ou plus), le panneau de verre feuilleté à revêtir comprend donc au moins :

- une feuille de verre supérieure 11a dont la face externe à l'assemblage est destinée à recevoir le revêtement et constitue la face extérieure dite supérieure 11a1 du panneau de verre feuilleté à revêtir,
- et une feuille de verre inférieure 11b constituée par la feuille de verre la plus éloignée de la feuille de verre supérieure 11a suivant la direction d'empilement (Z'Z) et dont la face externe à l'assemblage constitue la face extérieure dite inférieure 11b1 du panneau de verre feuilleté à revêtir.

Le matériau intercalaire polymère peut comprendre un ou plusieurs polymères.

Notamment, le matériau intercalaire polymère peut être le polybutyral de vinyle (PVB). Le PVB présente entre autres les avantages suivants :

- Le PVB présente un indice de réfraction proche de celui du verre silico-sodo-calcique couramment employé pour la réalisation de vitrages, de sorte que la feuille intercalaire est invisible ou quasiment invisible.
- Le PVB permet en outre d'absorber très efficacement les chocs et de retenir les fragments de verre en cas de bris du vitrage.

Il peut encore s'agir d'éthylène-acétate de vinyle (EVA). Les propriétés hydrophobes de l'EVA sont en particulier intéressantes si le panneau de verre revêtu est destiné à être installé en milieu humide ou en extérieur : le risque de délaminage dans le temps du fait de l'humidité est réduit par l'utilisation de l'EVA pour la couche intercalaire 12 de matériau polymère.

Il est aussi possible d'utiliser un matériau intercalaire polymère dit « ionoplast », notamment du type Sentry-Glass®, qui permet des former des verres feuilletés ne présentant pas de défauts de bullage ou de jaunissement même lorsqu'ils sont exposés lors de leur mise en œuvre à des températures élevées, jusqu'à 80°C.

Dans un autre mode de réalisation, le matériau intercalaire peut encore être le polyuréthane thermoplastique (aussi appelé TPU ou « Thermoplastic PolyUrethan ») ou une résine de coulée (ou équivalemment résine « CIP » (« Cast In Place »).

Le matériau intercalaire peut être teinté avant assemblage, de manière à conférer une coloration particulière au panneau de verre feuilleté en association avec le revêtement décoratif une fois le panneau revêtu.

Une fois le panneau de verre feuilleté à revêtir fourni, on fournit un matériau décoratif à l'état fluide.

Le matériau décoratif à l'état fluide peut notamment être à l'état liquide avec une viscosité plus ou moins importante, cette viscosité étant adaptée pour permettre le dépôt d'une couche de matériau décoratif sur le panneau de verre feuilleté, par exemple au moyen d'un rouleau ou d'un pistolet de pulvérisation ou encore d'une machine à rideau.

Le matériau décoratif est un matériau réfléchissant après séchage. Le matériau décoratif comprend de l'argent, qui peut entre autres être déposé par oxydoréduction en mettant en contact une solution de nitrate d'argent ammoniacal avec une solution de réducteur.

Le matériau décoratif est donc fourni à l'état fluide, dans la mesure où il comprend notamment un ou plusieurs solvants.

Dans les procédés connus de revêtement du verre non feuilleté par un matériau décoratif à l'état fluide, on dépose directement le matériau décoratif fluide sur une face du verre non feuilleté de manière à former une couche de revêtement décoratif et on procède au séchage de cette couche de revêtement décoratif.

Dans le cas d'un procédé d'argenture classique, la couche de vernis protecteur est appliquée au-dessus de la couche de matériau réfléchissant, par exemple au moyen d'une vernisseuse à rideau, le séchage du vernis étant réalisé par passage dans un four de sorte que la température atteinte en surface de la couche de vernis protecteur soit supérieure à 170°C pendant au moins deux minutes.

En résumé, les vernis utilisés classiquement dans la fabrication des miroirs sont des peintures monocomposant qui nécessitent une énergie thermique suffisante pour réticuler et atteindre les niveaux de performance attendus en termes de résistance chimique (anti corrosion) et mécanique (rayure), pour lesquels il est d'usage de maintenir le panneau de verre dans un four de sorte que la température atteinte en surface de la couche de vernis protecteur soit supérieure à 170°C pendant au moins deux minutes.

Quel que soit le mode de réalisation du dépôt de la couche de revêtement décoratif, on constate qu'un séchage par chauffage à température élevée est mis en œuvre dans les procédés de revêtement du verre non feuilleté classiquement utilisés dans le domaine des verres monolithiques et nécessaire pour obtenir la bonne réticulation de cette couche de revêtement décoratif, et ce de plus en une durée acceptable dans un procédé de fabrication industriel.

Ces procédés ne sont malheureusement pas transposables directement aux panneaux de verres feuilletés puisque l'étape de chauffage provoque le bullage du matériau intercalaire.

La Fig. 2a est une photographie d'un panneau de verre feuilleté du type Stadip® 44.2 produit par Saint-Gobain revêtu d'une couche de revêtement décoratif de type couche d'argent + vernis protecteur après traitement thermique classique c'est-à-dire un chauffage dans un four à infrarouges de sorte que la température de surface du panneau de verre feuilleté soit égale à 170°C pendant une durée de deux minutes, la Fig. 2b correspondant au même panneau de verre feuilleté juste avant le traitement thermique.

On constate sur la Fig. 2a que le procédé de revêtement suivant l'art antérieur provoque le bullage du matériau intercalaire, y compris assez loin des bords, bullage qui n'est pas présent juste avant l'étape de chauffage comme le montre la Fig. 2b.

Il n'est pas rentable d'envisager de tels procédés suivis d'une étape de découpe des bords et du déclassement de ceux-ci.

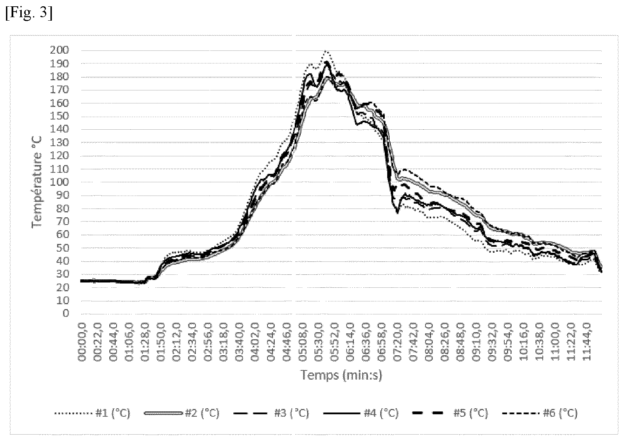

Pendant toute l'étape de séchage par chauffage qui suit le dépôt du revêtement décoratif dans le cas du panneau de verre de Fig. 2b, le profil de température suivi par la surface externe de la couche de revêtement décoratif a été suivi au moyen de six thermocouples répartis sur cette surface. Ce profil est reproduit sur la Fig. 3.

On constate sur la Fig. 3 que tous les points de la surface externe de la couche de protection atteignent une température supérieure à 170°C pendant au moins 30 secondes et une température supérieure à 140°C pendant au moins 2 minutes et 30 secondes.

Outre le bullage, le séchage par traitement thermique peut dans certains cas entraîner le jaunissement du matériau intercalaire polymère, ce qui peut être gênant dans des cas particuliers de revêtements décoratifs suivant l'invention. Le jaunissement est notamment à éviter dans le cas où le revêtement décoratif est du type miroir puisqu'il altère la couleur de l'image réfléchie par le miroir.

Il apparaît donc indispensable de modifier les procédés de séchage de la couche de revêtement décoratif 13 de l'art antérieur si l'on cherche à former une couche de revêtement décoratif 13 sur une face externe d'un panneau de verre feuilleté.

L'application de la couche décorative sur une face externe du verre feuilleté déjà constitué est une étape obligatoire du procédé suivant l'invention, malgré sa difficulté de mise en œuvre car elle présente plusieurs avantages.

En premier lieu, cela permet de modifier l'aspect d'un panneau de verre feuilleté fabriqué au préalable, éventuellement sur une autre chaîne de production, et de choisir le revêtement décoratif a posteriori, éventuellement au cas par cas.

En second lieu, la superposition d'au moins deux feuilles de verre sous la couche de revêtement décoratif permet d'améliorer la qualité optique du verre feuilleté revêtu, et ce en particulier dans le cas où on cherche à former un miroir en verre feuilleté. En effet, chaque feuille de verre présente des défauts de planéité dont le pas est de l'ordre du mètre et des défaut optiques dont le pas est de l'ordre de 1 cm à 10 cm, mais qui ne peuvent pas se trouver tous superposés les uns aux autres lors de l'assemblage des deux feuilles de verre. Les distorsions optiques du verre feuilleté revêtu sur sa face externe sont donc moindres que si le revêtement avait été intercalé entre les deux feuilles de verres.

Les inventeurs ont dans un premier temps envisagé de réduire la température de consigne T_ext du dispositif de séchage, et/ou la température maximale atteinte en surface du panneau de verre feuilleté et/ou la durée pendant laquelle cette température maximale de surface est atteinte (ou encore la durée de chauffage t_chauff à la température de consigne, cette durée de chauffage t_chauff étant corrélée à la température maximale de surface atteinte et à la durée pendant laquelle elle est atteinte, comme le montre l'exemple 2) dans le cas d'un panneau en verre feuilleté et non monolithique. Une diminution pure et simple de ces paramètres ne se fait pas à l'évidence car elle entraîne une réticulation insuffisante de la couche de revêtement décoratif 13, notamment - le cas échéant - de la couche de vernis protecteur, de sorte que la couche de revêtement décoratif ne sera pas suffisamment résistante pour sa manutention ou son utilisation ultérieures. On observe par exemple des problèmes d'écaillage de la couche de revêtement décoratif 13 lors de la manipulation d'un panneau de verre feuilleté revêtu donné et de collage des panneaux de verre feuilleté revêtus entre eux lors d'éventuels passages dans un autoclave, voire de résistance insuffisante à la corrosion.

Pour pallier le problème technique de l'obtention d'une couche de revêtement décoratif convenablement réticulée et ce dans un temps acceptable pour un procédé industriel (notamment pour un procédé de fabrication en continu, dans lequel le panneau de verre feuilleté à revêtir est déplacé à vitesse constante sur une chaîne de production), typiquement de l'ordre de quelques minutes ou de quelques dizaines de minutes, les inventeurs ont donc envisagé de recourir à des durcisseurs chimiques ou des catalyseurs chimiques.

Notamment, il peut être envisagé d'incorporer au matériau décoratif à l'état fluide une proportion totale d'un ou plusieurs catalyseurs de réticulation et/ou de durcisseurs chimiques P_cata égale ou supérieure à 0.1%, ou encore égale ou supérieure à 0,5% en masse, 1% en masse, 2% en masse du matériau décoratif à l'état fluide, 2,5 % en masse du matériau décoratif à l'état fluide et optionnellement inférieure à 10% en masse du matériau décoratif à l'état fluide, voire inférieure à 5% en masse du matériau décoratif à l'état fluide .

Le vernis protecteur peut être d'une façon non limitative choisi parmi : les vernis anticorrosion du commerce de fournisseurs tels que FENZI (par exemple les vernis FENZI One coat LF 3 grey SG, FENZI one coat WBLF 6), VALSPAR (par exemple les références SK1420 ou SK1440) ou EUROCOATINGS (par exemple le vernis eurocoatings glasskin007).

En ce qui concerne le durcisseur chimique ou le catalyseur de réticulation, il peut être choisi en fonction du matériau décoratif fluide.

Notamment, un catalyseur acide tel que l'acide fluorhydrique, l'acide phosphorique, l'acide paratoluènesulfonique, ou tout autre catalyseur de transestérification peut être mise en œuvre.

Le matériau décoratif fluide dans lequel au moins un durcisseur chimique et/ou au moins un catalyseur de réticulation a été incorporé est ensuite déposé sur la face supérieure 11a1 du panneau de verre feuilleté à revêtir de manière à former au moins une couche de revêtement décoratif 13. Le dépôt du matériau décoratif fluide peut être réalisé au moyen d'un dispositif de dépôt d'un matériau fluide tel qu'une vernisseuse à rideau, un rouleau ou un pistolet.

L'épaisseur de l'au moins une couche de revêtement décoratif peut être supérieure à 10 micromètres.

Puis on procède au séchage de la couche de revêtement décoratif de manière à obtenir sa réticulation et l'évaporation au moins partielle des solvants.

La proportion P_cata de durcisseur chimique ou de catalyseur de réticulation doit être choisie pour permettre une application du revêtement décoratif dans un état fluide et notamment au cours d'un procédé industriel. En particulier, cette proportion peut être choisie pour permettre une application du revêtement décoratif au moyen d'un dispositif tel qu'une machine à rideau. Notamment, il n'est pas possible d'augmenter de manière inconsidérée la proportion de durcisseur chimique ou de catalyseur de réticulation puisqu'une proportion trop élevée entraîne une prise en masse du produit à une température trop faible et/ou trop rapidement. Le matériau décoratif ne reste dans un tel cas pas à l'état fluide assez longtemps pour permettre son application sur la face supérieure 11a1 du panneau de verre feuilleté à revêtir.

La prise en masse non contrôlée entraîne aussi l'obstruction des conduites ou éléments de transport au travers desquels le matériau décoratif doit circuler.

La durée de prise en masse du catalyseur a été évaluée par observation à l'œil nu dans le cas où le catalyseur de réticulation est l'acide paratoluènesulfonique incorporé au matériau décoratif fluide est le One Coat LF3 de la marque Fenzi dans une proportion P_cata exprimée en pourcentage de la masse du matériau décoratif fluide.

Les résultats sont regroupés dans le tableau 3 ci-dessous :

[Table 3]

Tableau 3 : durée de prise en masse en fonction de la proportion P_cata de catalyseur de réticulation

| P_cata (%) | Durée de prise en masse (qualitatif h) |
|---|---|
| 0,1 | > 24 |
| 0,5 | > 24 |
| 1 | > 24 |
| 2,5 | > 24 |
| 5 | > 24 |
| 10 | 9-24 |
| 25 | 2 |
| 50 | 0,5 |

On constate qu'une proportion excessive de durcisseur chimique ou de catalyseur de réticulation ne laisse que peu de temps pour des étapes ultérieures de traitement du matériau décoratif fluide, notamment pour son application sur le panneau de verre feuilleté à revêtir.

Il est donc nécessaire de trouver un compromis entre la proportion de durcisseur chimique ou de catalyseur de réticulation, la température de séchage et le temps de séchage.

Une proportion P_cata de durcisseur chimique ou de catalyseur de réticulation inférieure ou égale à 10% en masse du matériau décoratif fluide, voire à 5% en masse du matériau décoratif fluide, voire encore à 2,5% en masse du matériau décoratif fluide peut convenir pour la mise en œuvre du procédé suivant l'invention.

On comprend encore au travers de ces expériences que la mise en œuvre de durcisseurs chimiques ou de catalyseurs chimiques pour la couche de revêtement décoratif d'un panneau de verre feuilleté ne se fait pas sans activité inventive : les inventeurs ont testé de nombreux profils de montée/descente en température pour le séchage par chauffage du panneau de verre feuilleté recouvert d'une couche de revêtement décoratif avant de parvenir un résultat satisfaisant.

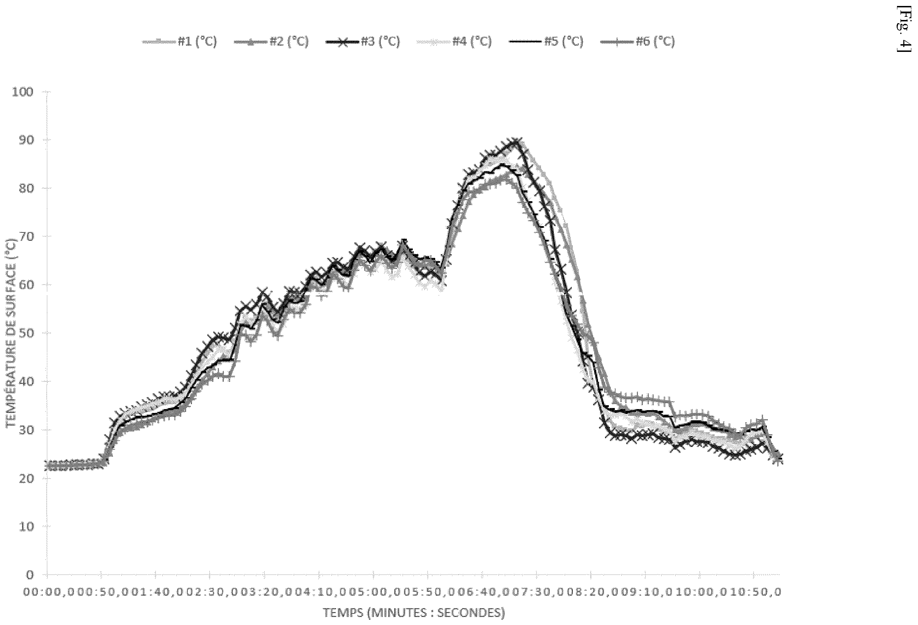

Une partie de ces profils sont reproduits sur la Fig. 4 sur une campagne d'expérience menée sur des panneaux de verre feuilleté de type Stadip® 44.2 PVB de dimensions 800mmx600mm argentés avec une couche d'épaisseur 700 mg/m$^2$ sur laquelle a été déposé une couche de vernis One Coat LF3 de la marque Fenzi dans lequel a été incorporé 0,5% en masse d'acide paratoluènesulfonique, d'une épaisseur égale à 50 micromètres.

Les résultats de ces expériences peuvent être observés dans le tableau 1 ci-dessous, dans laquelle les effets du chauffage sont indiqués pour chaque essai en termes de :

- bullage de la couche intercalaire 12 (observation à l'œil nu)
- jaunissement de la couche intercalaire 12 (observation à l'œil nu)

La réticulation de la couche de revêtement décoratif peut être évaluée sur la base d'un test dit de chiffonnage (ou encore test de résistance à l'abrasion ou « rub test »), le nombre d'allers-retours nécessaire pour attaquer ce revêtement étant évalué. Plus précisément, un test de chiffonnage permet de déterminer si un revêtement est suffisamment cuit, ou réticulé en évaluant sa résistance à la dilution en présence d'un solvant. De manière générale, un test de chiffonnage consiste à imbiber un chiffon d'un solvant déterminé, qui est un diluant connu du matériau du revêtement à tester. Le chiffon peut être un tissu ou un non-tissé, en fibres naturelles ou artificielles. Le test de chiffonnage comprend alors un nombre d'aller-retour en frottant à l'aide du chiffon imbibé, sur une distance déterminée à la surface du revêtement à tester, par exemple sur une distance de 20 cm (centimètres). Le test peut être répéter à plusieurs endroits de la surface du revêtement à tester. Le test est réalisé manuellement, ou à l'aide d'une machine.

Un exemple de test de chiffonnage sur le panneau de verre feuilleté est le suivant : on effectue au moyen d'un chiffon (ou « pad ») en cellulose renforcée par du polypropylène ou du polyester (chiffon « heavy duty cleaning cloth » référence 530276 de la marque TORK®) de dimensions 200 mm * 100 mm, le chiffon étant saturé en un solvant et ayant une surface de contact avec le panneau à tester de 3 cm$^2$, des allers et retours à la surface du panneau sur une distance de 5 cm à une vitesse de déplacement comprise entre 15 m/min, la pression exercée sur le revêtement étant contrôlée au moyen d'un poids de 1kg et donc égale à 32,7 kPa (kilopascals).

Le solvant utilisé pour saturer le chiffon est le xylène, qui est un solvant connu pour la couche de revêtement décoratif 13 constituée à partir d'un matériau fluide en phase organique. Le solvant utilisé pour saturer le chiffon peut être de l'eau si la couche de revêtement décoratif a été constituée à partir d'un fluide en phase aqueuse.

La couche de revêtement décoratif 13 est dite correctement réticulée si la couche de revêtement décoratif n'est pas dissoute dans le solvant saturant le chiffon après un nombre N prédéterminé d'allers-retours. Notamment le nombre N prédéterminé d'allers-retours peut être supérieur ou égal à 20, supérieur ou égal à 30, supérieur ou égal à 40, supérieur ou égal à 50, supérieur ou égal à 60, supérieur ou égal à 70, supérieur ou égal à 80, supérieur ou égal à 90, supérieur ou égal à 100, supérieur ou égal à 200, supérieur ou égal à 500.

[Table 1]

| Essai | Vitesse de chaine (m/min) | Température de surface maximale atteinte °C | durée (en s) pendant laquelle la température de surface est supérieure à : | | | bullage | Jaunissement | Nombre d'allers-retours « rub test » |
|---|---|---|---|---|---|---|---|---|
| | | | 100°C | 120°C | 130°C | | | |
| 1 | 1.5 | 90 | 0 | 0 | 0 | Non | Non | 20 |
| 2 | 1.5 | 102 | 25 | 0 | 0 | Non | Non | 20 |
| 3 | 1.5 | 131 | 220 | 85 | 10 | Non | Non | 30 |
| 4 | 1.0 | 120 | 304 | 0 | 0 | Non | Non | 30 |
| 5 | 1.0 | 119 | 280 | 0 | 0 | Non | Non | 50 |
| 6 | 0.7 | 130 | 472 | 218 | 0 | Non | Non | > 200 |

On constate sur le tableau 1 que le choix du profil de température permet de contrôler la réticulation de la couche de revêtement décoratif. Les profils 1 à 6 permettent tous d'obtenir une résistance au test de chiffonnage supérieure à 20 allers-retours sans jaunissement ni bullage de la couche intercalaire 12.

On rappelle que ces résultats ont été obtenus avec une proportion P_cata égale à 0,5% d'acide paratoluènesulfonique incorporé dans le matériau fluide One Coat LF3 de la marque Fenzi.

En comparant les résultats obtenus pour les six profils, on constate de la température maximale de surface atteinte a un impact sur la réticulation.

En comparant les résultats obtenus pour le profil 4 à ceux obtenus pour le profil 5, ou encore les résultats obtenus pour le profil 3 à ceux obtenus pour le profil 6, on constate encore que la rapidité et/ou la durée pendant laquelle cette température de surface maximale est atteinte permettent de moduler la réticulation de la couche de revêtement décoratif 13.

Parmi les six profils de température décrits ici, le profil 6 permet d'obtenir une réticulation très satisfaisante de la couche de revêtement décoratif 13 avec une résistance au test de chiffonnage supérieure à deux cents allers-retours.

Ces expériences ont été réalisées en parallèle des expériences de l'exemple 1 et de l'exemple 2 décrits plus loin.

Ces nombreuses expériences ont permis aux inventeurs de définir les caractéristiques de l'étape de séchage qui, en combinaison avec l'ajout d'un durcisseur chimique ou d'un catalyseur de réticulation dans le matériau décoratif à l'état fluide, permet d'obtenir de manière industrielle un verre feuilleté revêtu d'une couche de revêtement décoratif présentant une résistance chimique et/ou une résistance mécanique satisfaisantes et des propriétés optiques et/ou décoratives améliorées par rapport à l'art antérieur.

Notamment, il a été mis en évidence que la durée de chauffage t_chauff pendant laquelle le panneau de verre feuilleté revêtu est séché par le dispositif de chauffage après que ce dispositif de chauffage a atteint sa température de consigne T_ext, cette température de consigne T_ext et le rapport P_cata de la masse de durcisseur chimique ou de catalyseur de réticulation et de la masse de matériau décoratif exprimée en pourcentage sont trois paramètres qui ne peuvent pas être choisis indépendamment les uns des autres.

Dans un mode de réalisation particulier, le rapport P_cata est choisi dans la gamme [0,1%, 5%], plus particulièrement dans la gamme [0,5%, 2,5%] voire plus particulièrement [0,75%, 1,25%]. Dans un mode de réalisation particulier, le rapport P_cata est égal à 1%. Pour chacune des quatre options de choix de la proportion P_cata qui précèdent, la température de consigne T_ext peut être choisie :

- dans la gamme [120°C ; 140°C], la durée t_chauff étant alors inférieure ou égale à 7, 5 minutes et optionnellement supérieure à 3 minutes,
- dans la gamme [100°C ; 120°C], la durée t_chauff étant alors supérieure ou égale à 7, 5 minutes ; notamment si la feuille de verre supérieure 11a est en verre clair et a une épaisseur comprise entre 2 mm et 6 mm, et si la couche de revêtement décoratif a une épaisseur avant séchage comprise entre 50 $\mu$m et 200$\mu$m.

L'au moins une couche de revêtement décoratif comprend au moins une couche de matériau réfléchissant, de manière à former un miroir.

L'au moins une couche de matériau réfléchissant peut être déposée par tous les procédés couramment utilisés dans le domaine de l'argenture.

L'épaisseur de la couche de matériau réfléchissant est adaptée pour obtenir une masse surfacique d'argent supérieure à la norme de 700 mg/m$^2$. Le matériau réfléchissant étant sujet à l'oxydation et peu résistant mécaniquement, une couche de vernis protecteur peut être appliquée sur la couche de matériau réfléchissant.

L'invention porte aussi sur un Panneau de verre feuilleté comprenant au moins deux feuilles de verre et dans lequel au moins deux feuilles de verre successives sont assemblées au moyen d'un matériau intercalaire polymère, le panneau de verre feuilleté présentant une première face (11a1) extérieure dite face (11a1) supérieure et une deuxième face (11b1) extérieure dite face (11b1) inférieure, le panneau étant caractérisé en ce que la face (11a1) supérieure du panneau de verre feuilleté est revêtue d'au moins une couche de revêtement décoratif (13) formée au moins en partie à partir d'un matériau décoratif fluide organique appliqué sur la face (11a1) supérieure du panneau de verre feuilletée après que les au moins deux feuilles de verre successives aient été assemblées au moyen du matériau intercalaire polymère et dans lequel l'au moins une couche de revêtement décoratif est constituée d'une couche de matériau réfléchissant de manière à former un miroir et d'une ou plusieurs couches de vernis protecteur, l'épaisseur de la couche de matériau réfléchissant correspondant à une masse surfacique d'argent supérieure à la norme de 700 mg/m$^2$.

Dans un mode de réalisation, le matériau intercalaire polymère ne présente pas de défaut de bullage observable à l'œil nu et résiste à au moins vingt allers-retours au test de chiffonnage dit rub test, voire à trente allers-retours au test de chiffonnage, à cinquante allers-retours au test de chiffonnage, à cent allers-retours au test de chiffonnage ou encore à deux cents allers-retours au test de chiffonnage. L'adhérence de la couche de revêtement décoratif 13 peut être quantifiée à une valeur d'au plus 2 au test de quadrillage selon la norme ISO 2409. Plus précisément, le test de quadrillage implique

l'application d'un outil coupant sur la surface du revêtement décoratif 13 en appliquant une pression uniforme afin de réaliser des premières incisions parallèles entre elles. L'opération est répétée en chevauchant les premières incisions de deuxièmes incisions à 90°, pour former un quadrillage. Un ruban adhésif est appliqué sur le quadrillage. Les incisions pénètrent la couche décorative 13 de préférence jusqu'au substrat. Puis, le ruban adhésif est retiré avec un angle proche de 180°. Il est alors évalué l'adhérence en fonction de la quantité de revêtement arrachée par le retrait du ruban adhésif. La valeur 2 correspond à un écaillement le long des bords incisés et/ou aux points d'interaction du quadrillage jusqu'à un peu plus de 15% de la surface totale quadrillée. Une telle quantification selon la norme ISO2409 correspond à la quantification attendue pour une couche décorative sur un verre monolithique ou sur un verre monolithique argenté.

Un tel produit ne peut à l'heure actuelle qu'être obtenu au moyen du procédé suivant l'invention, pour les raisons qui ont été préalablement exposées.

Dans un mode de réalisation du panneau de verre feuilleté revêtu, le matériau polymère intercalaire est teinté. Le panneau de verre feuilleté étant revêtu d'un matériau réfléchissant de manière à former un miroir, cette disposition permet notamment d'obtenir un miroir teinté, par exemple de couleur bronze, sans avoir besoin de recourir aux processus usuels pour teinter les miroirs, processus de mise en œuvre lourde et coûteuse.

Dans un mode de réalisation du panneau de verre feuilleté revêtu, des moyens de chauffage sont incorporés soit dans le matériau intercalaire polymère soit dans au moins l'une des deux feuilles de verre. Par exemple, des microfilaments chauffants peuvent être incorporés dans du PVB, ou encore l'une des deux feuilles de verre ou le panneau de verre peuvent être du type EGLAS® de la société Saint Gobain(R). Cette disposition permet d'obtenir un panneau de verre revêtu chauffant, tel qu'un miroir chauffant, dont la résistance mécanique est améliorée par rapport aux solutions de l'art antérieur.

L'invention porte enfin sur l'utilisation d'un panneau de verre feuilleté :

- dans le domaine du bâtiment, notamment pour la réalisation de cloisons séparatives décoratives ou de planchers respectant les normes de sécurité requises,
- ou dans le domaine de l'ameublement pour la réalisation de meubles comprenant des parois ou des éléments de parois décoratifs respectant les normes de sécurité requises, par exemple des meubles sur mesure.

## EXEMPLES

### Exemple 1 : test de réticulation

Mode opératoire :

On applique sur un panneau de verre monolithique d'épaisseur 3mm revêtu d'une couche de vernis Fenzi ONE COAT LF3 GREY SG (Référence commerciale : 23689 à la date de première priorité) d'épaisseur 100 $\mu$m au moyen d'un tire-film, vernis dans lequel il a au préalable été incorporé le catalyseur de réticulation acide paratoluènesulfonique dans une proportion P_cata exprimée en pourcentage de la masse de vernis.

Le panneau de verre feuilleté ainsi revêtu est placé dans un four à air chaud dont la température de consigne est T_ext pendant une durée t_chauff à cette température de consigne.

Dans le cas des expériences de l'exemple 1, la durée nécessaire pour atteindre la température de consigne après insertion du panneau de verre feuilleté dans le four est de l'ordre de 2,5 minutes, de sorte que le temps de passage du panneau de verre feuilleté dans le four à air chaud est de l'ordre de t_chauff+2,5 minutes.

Après refroidissement, on procède à l'évaluation de la qualité de la réticulation de la couche de vernis au moyen du test de dureté Persoz.

Test de dureté Persoz :

Le test de dureté est réalisé au moyen d'un pendule de mesure automatique de la dureté Persoz, conformément à la norme ISO1522.

Le système du pendule de Persoz permet de mesurer le nombre d'oscillation d'un pendule en acier inox, de masse égale à 500 g, reposant sur un matériau (en l'occurrence sur la face externe de la couche de revêtement décoratif) via deux billes en carbure de tungstène de diamètre 8 mm distantes de 50 mm.

Un échantillon de panneau de verre feuilleté revêtu est inséré dans le pendule de Persoz et placé face revêtue vers le haut.

Le pendule est lâché d'un angle de 12°, le nombre d'oscillations N2 du pendule est décompté jusqu'à ce que l'amplitude des oscillations atteigne un angle de 4°.

Plus la peinture est réticulée, plus la surface de la peinture est dure, et en conséquence, plus le nombre d'oscillations est important.

Résultats :

Les résultats des tests sont regroupés dans le tableau 2 ci-dessous :

[Table 2]

**Tableau 2 : nombre d'oscillations mesurées au test du pendule de Persoz en fonction de T_ext, P_cata et t_chauff**

| T_ext(°C) | t_chauff (minutes) | N2 pour P_cata = 0,1% | N2 pour P_cata = 0,5% | N2 pour P_cata = 1% | N2 pour P_cata = 2,5% |
|---|---|---|---|---|---|
| 80 | 0 | 57 | 53 | 50 | 32 |
| 80 | 2,5 | 64 | 54 | 47 | 31 |
| 80 | 5 | 60 | 56 | 58 | 40 |
| 80 | 7,5 | 66 | 57 | 57 | 40 |
| 100 | 0 | 63 | 59 | 57 | 34 |
| 100 | 2,5 | 72 | 64 | 56 | 43 |
| 100 | 5 | 76 | 73 | 79 | 71 |
| 100 | 7,5 | 88 | 80 | 98 | 78 |
| 120 | 0 | 62 | 60 | 50 | 38 |
| 120 | 2,5 | 78 | 82 | 131 | 122 |
| 120 | 5 | 84 | 108 | 148 | 129 |
| 120 | 7,5 | 137 | 136 | 159 | 146 |
| 140 | 0 | 66 | 64 | 106 | 87 |
| 140 | 2,5 | 119 | 124 | 144 | 133 |
| 140 | 5 | 151 | 146 | 165 | 151 |
| 140 | 7,5 | 175 | 170 | 174 | 169 |
| 160 | 0 | 99 | 86 | 115 | 80 |
| 160 | 2,5 | 172 | 168 | 140 | 128 |
| 160 | 5 | 192 | 193 | 144 | 132 |
| 160 | 7,5 | 193 | 201 | 152 | 143 |

On constate que, quelle que soit la proportion de catalyseur P_cata testée entre 0,1% et 2,5%, une durée de chauffage t_chauff inférieure ou égale à 10 minutes (durée typiquement compatible avec un processus industrialisé), à une température de consigne T_ext = 80°C ne permet pas d'obtenir une réticulation satisfaisante, c'est-à-dire dans ce cas un nombre d'oscillations supérieur ou égal à 150 avec le test de Persoz.

Il en va de même pour une température de consigne T_ext = 100°C.

A partir de T_ext = 120°C, on constate qu'il est possible d'obtenir une réticulation satisfaisante à condition de prévoir une durée de chauffage t_chauff et une proportion de catalyseur P_cata en relation avec cette température de consigne T_ext.

Notamment, les combinaisons :

- T_ext= 120°C, t_chauff = 7,5 minutes et P_cata= 1% ;
- T_ext= 140°C, t_chauff = 7,5 minutes et P_cata= 0,1% ; 0,5% ; 1% ou 2,5% ;
- T_ext= 140°C, t_chauff = 5 minutes et P_cata= 0,1% ; 1% ou 2,5% ;
- T_ext= 160°C, t_chauff = 2,5 minutes et P_cata= 0,1% ou 0,5% ;
- T_ext= 160°C, t_chauff = 5 minutes et P_cata= 0,1% ou 0,5% ;
- T_ext = 160°C, t_chauff = 7,5 minutes et P_cata= 0,1% ; 0,5% ou 1% ;

permettent d'obtenir une réticulation satisfaisante c'est-à-dire pour cette série d'expériences un nombre d'oscillations N2 supérieur ou égal à 150 avec le test de Persoz.

Conclusion :

L'expérience de l'exemple 1 montre que, de manière contre-intuitive, la qualité de la réticulation ne varie pas toujours dans le même sens que la proportion P_cata. Notamment, une proportion P_cata trop élevée peut être contre-productive.

L'expérience de l'exemple 1 prouve aussi que l'obtention d'une réticulation correcte de la couche de revêtement décoratif 13 dépend de la combinaison de trois paramètres : la température de chauffage du panneau de verre feuilleté après application du matériau décoratif à l'état fluide dans lequel est incorporé un durcisseur chimique ou un catalyseur de réticulation, la proportion de durcisseur chimique ou de catalyseur de réticulation, et la durée de ce chauffage en vue du séchage.

Cet exemple est à combiner avec l'évaluation du bullage du matériau intercalaire polymère formant la couche intercalaire 12 et optionnellement le jaunissement de ce matériau. Pour éviter tout bullage, le couple (température de consigne T_ext, durée de chauffage à cette température de consigne t_chauff) doit être choisi de manière appropriée, la durée de chauffage étant corrélée à la proportion P_cata.

**Exemple 2 : estimation des paramètres T_ext, t_chauff et P_cata**

Un modèle simplifié est mis en place pour estimer les paramètres de l'étape de séchage de la couche de revêtement décoratif.

Hypothèses du modèle :

On considère en première approche que le système formé par la feuille de verre supérieure 11a et la couche de revêtement décoratif 13 a, à l'instant t, une température homogène $T(t)$ et est placé en contact avec un thermostat à la température $T_0$ ($T_0$ étant égal à T_ext lorsque le panneau de verre feuilleté revêtu est placé dans un four à air chaud ayant atteint sa température de consigne T_ext) alors.

Entre deux instants t et t+dt , la température T vérifie l'équation différentielle suivante :

[Math 1]

$$h\,S\,(T - T_0) = \rho\,c\,V\,\frac{dT}{dt}$$

Où V est le volume du système, S est la surface du système en contact avec le thermostat, c est la capacité thermique du système, $\rho$ la masse volumique du système et h le coefficient d'échange caractérisant les transferts thermiques entre le système et le thermostat.

La solution de cette équation différentielle s'écrit:

[Math 2]

$$\frac{T(t) - T_0}{T_i - T_0} = \exp\left(-\frac{h\,S}{\rho\,c\,V}\,t\right)$$

avec $T_i = T(t=0)$

La température de la feuille de verre supérieure 11a et de la couche de revêtement décoratif suit donc une évolution de type exponentielle de temps caractéristique $\tau$ avec :

[Math 3]

$$\tau = \frac{\rho\,c\,V}{h\,S} = \frac{\rho\,c\,e}{h}$$

où e =V/S est l'épaisseur du système suivant la direction d'empilement (Z'Z) du panneau de verre feuilleté revêtu.

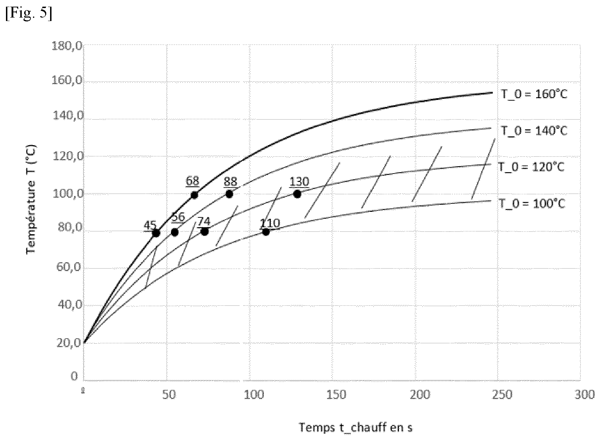

Cette évolution est représentée à titre d'exemple sur la figure 5 avec les paramètres suivants :

$$\rho = \text{masse volumique du verre} = 2530 \text{ kg/m}^3$$

$$c = \text{capacité thermique massique du verre} = 800 \text{ J/kg/K}$$

$$h = 100 \ \text{W/m}^2/\text{K}$$

$$T_i = T(t=0) \ = 20°C$$

Avec ces paramètres, le temps caractéristique $\tau$ des variations de la température T est de l'ordre de 80 secondes.

Conclusion :

On constate avec les hypothèses de ce modèle simpliste que dans le cas d'un chauffage à T_ext = 160°C, la température T de la feuille de verre supérieure 11a revêtue atteint rapidement T = 80°C puis T=100°C, respectivement après 45s et 68 s respectivement.

La montée en température est rapide, avec une température limite en régime permanent supérieure à la température de bullage du matériau polymère intercalaire. Ainsi, avec de telles conditions de chauffage, le matériau polymère intercalaire commencera à buller après une durée de chauffage t_chauff relativement courte notamment sur les bordures du feuilleté où les échanges thermiques avec la couche intercalaire 12 sont amplifiés, puis bullera dans la masse de cette couche intercalaire 12.

On constate aussi que la durée nécessaire pour que la température T du système s'élève de T = 80°C à T = 100°C s'allonge naturellement avec la baisse de $T_0$, ce qui permet d'augmenter le temps de chauffage t_chauff pour parfaire la réticulation du vernis sans pour autant provoquer le bullage du PVB.

Une modélisation plus complexe purement théorique et/ou des résultats expérimentaux peuvent être utilisés pour le choix de T_ext, t_chauff et P_cata.

Notamment, si le nombre de Biot du système est tel que l'hypothèse sur l'homogénéité de la température T n'est pas vérifiée expérimentalement, on peut convenir que, par précaution, pour éviter le bullage du matériau intercalaire polymère, il faut arrêter le chauffage au plus tard lorsque la température T du système est égale à la température limite T_lim pour laquelle on observe le bullage du matériau intercalaire polymère à laquelle on soustrait une marge de sécurité M_sec. Par ailleurs, la couche de revêtement décoratif 13, aussi fine soit elle, joue un rôle de bouclier thermique retardant le transfert de chaleur.

L'effusivité thermique du verre constituant la feuille de verre supérieure 11a peut aussi impacter le temps caractéristique du transfert thermique jusqu'au matériau intercalaire polymère.

Par exemple, on peut prendre en compte l'ensemble de ces facteurs d'influence en considérant que les paramètres de l'étape de séchage doivent être choisis de manière à ce que la température T_max atteinte par le système, et notamment par la surface externe du système, après une durée de chauffage t_chauff est égale à T_lim - M_sec.

Notamment dans le cas du panneau de verre feuilleté revêtu utilisé pour l'exemple 1 dont le matériau intercalaire polymère est le PVB, on peut considérer que la combinaison des temps de chauffage t_chauff et de température T_ext = T_0 correspondant à la zone hachurée sur la figure 5 entre les courbes T_0 = 100°C et T_0 = 140°C est adaptée, à condition que la proportion de durcisseur chimique ou de catalyseur de réticulation soit compatible avec les durées de chauffage t_chauff correspondantes.

## LISTE DES SIGNES DE RÉFÉRENCE

1 : panneau de verre feuilleté revêtu
11a : feuille de verre supérieure
11a1 : face supérieure du panneau de verre feuilleté à revêtir
11b : feuille de verre inférieure
11b1 : face inférieure du panneau de verre feuilleté à revêtir
12 : couche intercalaire de matériau polymère
13 : couche de revêtement décoratif

## Revendications

1. Procédé de revêtement d'un panneau de verre feuilleté comprenant :

   - on fournit un panneau de verre feuilleté à revêtir comprenant au moins deux feuilles de verre (11a, 11b) et dans lequel au moins deux feuilles de verre successives sont assemblées au moyen d'un matériau intercalaire polymère formant après assemblage une couche intercalaire (12), le panneau de verre feuilleté à revêtir présentant au moins une face supérieure (11a1) à revêtir ;

- on fournit un matériau décoratif fluide ;
- on incorpore un durcisseur chimique ou un catalyseur de réticulation dans le matériau décoratif fluide dans un rapport P_cata entre la masse de durcisseur chimique ou de catalyseur de réticulation et de la masse de matériau décoratif à l'état fluide déterminé;
- on forme au moins une couche de revêtement décoratif (13) par application du matériau décoratif à l'état fluide dans lequel est incorporé le durcisseur chimique ou le catalyseur de réticulation sur la face supérieure (11a1) du panneau de verre feuilleté à revêtir;
- on sèche la couche de revêtement décoratif par chauffage du panneau de verre feuilleté ainsi recouvert au moyen d'un dispositif de séchage dont une température de consigne (T_ext) est supérieure ou égale à 100°C et inférieure à 140°C,

Procédé dans lequel l'au moins une couche de revêtement décoratif est constituée d'une couche de matériau réfléchissant de manière à former un miroir et d'une ou plusieurs couches de vernis protecteur, l'épaisseur de la couche de matériau réfléchissant correspondant à une masse surfacique d'argent supérieure à la norme de 700 mg/m$^2$.

2. Procédé de revêtement d'un panneau de verre feuilleté suivant la revendication 1 dans lequel le matériau intercalaire polymère est choisi parmi le polybutyral de vinyle, l'éthylène-acétate de vinyle, un polymère ionoplast, le polyuréthane thermoplastique et une résine de coulée.

3. Procédé de revêtement d'un panneau de verre feuilleté suivant l'une des revendications précédentes dans lequel l'au moins une couche de revêtement décoratif est constituée soit d'une couche de matériau réfléchissant et d'une ou plusieurs couches de vernis protecteur soit d'une ou plusieurs couches de laque et optionnellement d'une ou plusieurs couches de vernis protecteur.

4. Procédé de revêtement d'un panneau de verre feuilleté suivant l'une des revendications précédentes dans lequel le rapport P_cata de la masse de durcisseur chimique ou de catalyseur de réticulation et de la masse de matériau décoratif à l'état fluide est supérieur à 0,1%.

5. Procédé de revêtement d'un panneau de verre feuilleté suivant l'une des revendications précédentes dans lequel :

- si la température de consigne du dispositif de séchage (T_ext) est choisie dans la gamme [100°C, 120°C], ladite durée de de chauffage (t_chauff) au moyen du dispositif de séchage est supérieure ou égale à 7,5 minutes et ledit rapport P_cata est choisi dans la gamme [0,1% ; 5%] ,
- et si la température de consigne du dispositif de séchage (T_ext) est choisie dans la gamme [120°C, 140°C], ladite durée de de chauffage (t_chauff) au moyen du dispositif de séchage est inférieure ou égale à 7,5 minutes et supérieure ou égale à 3 minutes et ledit rapport P_cata est choisi dans la gamme [0,1% ; 5%].

6. Procédé de revêtement d'un panneau de verre feuilleté suivant l'une des revendications précédentes dans lequel le durcisseur chimique ou le catalyseur de réticulation est choisi parmi les catalyseurs acides et optionnellement parmi l'acide fluorhydrique, l'acide phosphorique et l'acide paratoluènesulfonique.

7. Procédé selon l'une quelconque des revendications précédentes, comprenant une étape dans laquelle on détermine la durée de chauffage (t_chauff) du panneau de verre feuilleté à la température de consigne (T_ext) et/ou le rapport P_cata de la masse de durcisseur chimique ou de catalyseur de réticulation et de la masse de matériau décoratif à l'état fluide lors de l'incorporation en fonction de ladite température de consigne (T_ext).

8. Panneau de verre feuilleté comprenant au moins deux feuilles de verre et dans lequel au moins deux feuilles de verre successives sont assemblées au moyen d'un matériau intercalaire polymère, le panneau de verre feuilleté présentant une première face (11a1) extérieure dite face (11a1) supérieure et une deuxième face (11b1) extérieure dite face (11b1) inférieure,

le panneau étant **caractérisé en ce que** la face (11a1) supérieure du panneau de verre feuilleté est revêtue d'au moins une couche de revêtement décoratif (13) formée au moins en partie à partir d'un matériau décoratif fluide organique appliqué sur la face (11a1) supérieure du panneau de verre feuilletée après que les au moins deux feuilles de verre successives aient été assemblées au moyen du matériau intercalaire polymère et dans lequel l'au moins une couche de revêtement décoratif est constituée d'une couche de matériau réfléchissant de manière à former un miroir et d'une ou plusieurs couches de vernis protecteur, l'épaisseur de la couche de matériau réfléchissant correspondant à une masse surfacique d'argent supérieure à la norme de 700 mg/m$^2$.

9. Panneau de verre feuilleté selon la revendication précédente dans lequel : le matériau intercalaire polymère ne présente pas de défaut de bullage observable à l'œil nu, et la couche de revêtement décoratif (13) résiste à au moins vingt allers-retours à un test de chiffonnage effectué en frottant la surface de la couche de revêtement décoratif (13) sur une distance déterminée à l'aide d'un chiffon en cellulose renforcée par du polypropylène ou du polyester de dimensions 200 mm * 100 mm, imbibé d'un solvant pour la couche de revêtement décoratif (13), et ayant une surface de contact avec le panneau à tester de 3 cm$^2$, les allers et retours à la surface du panneau sur une distance de 5 cm étant réalisés à une vitesse de déplacement comprise entre 15 m/min, la pression exercée sur le revêtement étant contrôlée au moyen d'un poids de 1kg.

10. Panneau de verre feuilleté selon la revendication 9 dont la couche de revêtement décoratif (13) résiste à au moins deux cents allers-retours au test de chiffonnage.

11. Panneau de verre feuilleté suivant l'une quelconque des revendications 8 à 10 dans lequel le matériau intercalaire polymère est teinté.

12. Panneau de verre feuilleté suivant l'une quelconque des revendications 8 à 11 dans lequel des moyens de chauffage sont incorporés dans le matériau intercalaire polymère ou dans au moins l'une des au moins deux feuilles de verre.

13. Utilisation d'un panneau de verre feuilleté suivant l'une quelconque des revendications 8 à 12 dans le domaine du bâtiment ou de l'ameublement.

**Patentansprüche**

1. Verfahren zum Beschichten einer Verbundglasscheibe, umfassend:

   - es wird eine zu beschichtende Verbundglasscheibe bereitgestellt, die mindestens zwei Glasscheiben (IIa, IIb) umfasst und bei der mindestens zwei aufeinanderfolgende Glasscheiben mittels eines polymerischen Zwischenlagenmaterials verbunden sind, das nach dem Zusammenfügen eine Zwischenlage (12) bildet, wobei die zu beschichtende Verbundglasscheibe mindestens eine obere Fläche (IIaI) zum Beschichten aufweist;
   - es wird ein flüssiges dekoratives Material bereitgestellt;
   - es wird ein chemischer Härter oder ein Vernetzungskatalysator in das flüssige dekorative Material in einem bestimmten Verhältnis P_cata zwischen der Masse des chemischen Härters oder des Vernetzungskatalysators und der Masse des flüssigen dekorativen Materials eingearbeitet;
   - es wird mindestens eine Schicht der dekorativen Beschichtung (13) gebildet, indem das flüssige dekorative Material, in das der chemische Härter oder der Vernetzungskatalysator eingearbeitet ist, auf die obere Fläche (IIaI) der zu beschichtenden Verbundglasscheibe aufgetragen wird;
   - die Schicht der dekorativen Beschichtung wird durch Erhitzen der so beschichteten Verbundglasscheibe mittels einer Trocknungsvorrichtung getrocknet, deren Solltemperatur (T_ext) größer oder gleich 100°C und kleiner als 140°C ist,

   Verfahren, bei dem die mindestens eine Schicht der dekorativen Beschichtung aus einer Schicht aus reflektierendem Material zur Ausbildung eines Spiegels und aus einer oder mehreren Schutzlackschichten besteht, wobei die Dicke der Schicht aus reflektierendem Material einer Flächenmasse von Silber größer als die Norm von 700 mg/m$^2$ entspricht.

2. Beschichtungsverfahren einer Verbundglasscheibe gemäß Anspruch 1, wobei das polymerische Zwischenlagenmaterial ausgewählt ist aus Polyvinylbutyral, Ethylen-Vinylacetat, einem Ionoplast-Polymer, thermoplastischem Polyurethan und einem Gießharz.

3. Beschichtungsverfahren einer Verbundglasscheibe gemäß einem der vorstehenden Ansprüche, wobei die mindestens eine Schicht der dekorativen Beschichtung entweder aus einer Schicht aus reflektierendem Material und einer oder mehreren Schutzlackschichten besteht oder aus einer oder mehreren Lackschichten und optional aus einer oder mehreren Schutzlackschichten.

4. Verfahren zur Beschichtung einer Verbundglasscheibe gemäß einem der vorhergehenden Ansprüche, wobei das Verhältnis P_cata der Masse des chemischen Härters oder des Vernetzungskatalysators zur Masse des flüssigen dekorativen Materials größer als 0,1 % ist.

5. Verfahren zum Beschichten einer Verbundglasscheibe gemäß einem der vorstehenden Ansprüche, wobei:

- wenn die Solltemperatur des Trocknungsgeräts (T_ext) im Bereich [100°C, 120°C] gewählt wird, die betreffende Heizdauer (t_chauff) mittels des Trocknungsgeräts größer oder gleich 7,5 Minuten ist und das Verhältnis P_cata im Bereich [0,1 %; 5 %] gewählt wird,
- und wenn die Solltemperatur des Trocknungsgeräts (T_ext) im Bereich [120°C, 140°C] gewählt ist, die betreffende Heizdauer (t_chauff) mittels des Trocknungsgeräts kleiner oder gleich 7,5 Minuten und größer oder gleich 3 Minuten ist und das Verhältnis P_cata im Bereich [0,1 %; 5 %] gewählt wird.

6. Verfahren zum Beschichten einer Verbundglasscheibe gemäß einer der vorstehenden Ansprüche, wobei der chemische Härter oder der Vernetzungskatalysator aus sauren Katalysatoren ausgewählt wird und optional aus Fluorwasserstoffsäure, Phosphorsäure und p-Toluolsulfonsäure gewählt wird.

7. Verfahren nach einem der vorstehenden Ansprüche, das einen Schritt umfasst, in dem die Heizdauer (t_chauff) der Verbundglasscheibe bei der Solltemperatur (T_ext) und/oder das Verhältnis P_cata der Masse des chemischen Härters oder Vernetzungskatalysators zur Masse des flüssigen dekorativen Materials zum Zeitpunkt der Einbringung in Abhängigkeit von genannter Solltemperatur (T_ext) bestimmt wird.

8. Verbundglasscheibe, die mindestens zwei Glasscheiben umfasst und bei der mindestens zwei aufeinanderfolgende Glasscheiben mittels eines polymerischen Zwischenlagenmaterials zusammengefügt sind, wobei die Verbundglasscheibe eine erste äußere Fläche (llal), genannt obere Fläche (11a1), und eine zweite äußere Fläche (11b1), genannt untere Fläche (llbl), aufweist,
Die Verbundglasscheibe ist **dadurch gekennzeichnet, dass** die obere Fläche (llal) mit mindestens einer Schicht der dekorativen Beschichtung (13) überzogen ist, die zumindest teilweise aus einem organischen, flüssigen dekorativen Material besteht, welches auf die obere Fläche (llal) der Verbundglasscheibe aufgebracht wird, nachdem die mindestens zwei aufeinanderfolgenden Glasscheiben mittels des polymerischen Zwischenlagenmaterials zusammengefügt wurden; die mindestens eine Schicht der dekorativen Beschichtung besteht aus einer Schicht aus reflektierendem Material zur Bildung eines Spiegels und aus einer oder mehreren Schutzlackschichten, wobei die Dicke der Schicht aus reflektierendem Material einer Flächenmasse von Silber von mehr als 700 mg/m$^2$ entspricht.

9. Verbundglasscheibe nach dem vorhergehenden Anspruch, wobei: das polymerische Zwischenlagenmaterial keine mit bloßem Auge sichtbaren Blasenfehler aufweist, und die Schicht der dekorativen Beschichtung (13) mindestens zwanzig Hin- und Rückbewegungen bei einem wischtest aushält, der durch Reiben der Oberfläche der Schicht der dekorativen Beschichtung (13) über eine festgelegte Strecke mit einem Zellstofftuch, verstärkt durch Polypropylen oder Polyester, von den Abmessungen 200 mm $\times$ 100 mm ausgeführt wird, das mit einem Lösungsmittel für die Schicht der dekorativen Beschichtung (13) getränkt ist und eine Kontaktfläche mit der zu prüfenden Platte von 3 cm$^2$ hat, wobei die Hin- und Rückbewegungen über eine Strecke von 5 cm mit einer Vorschubgeschwindigkeit zwischen 15 m/min durchgeführt werden und der auf die Beschichtung ausgeübte Druck mittels eines Gewichts von 1 kg kontrolliert wird.

10. Verbundglasscheibe nach Anspruch 9, deren Schicht der dekorativen Beschichtung (13) mindestens zweihundert Hin- und Rückbewegungen beim wischtest standhält.

11. Verbundglasscheibe gemäß einem der Ansprüche 8 bis 10, wobei das polymerische Zwischenlagenmaterial eingefärbt ist.

12. Verbundglasscheibe gemäß einem der Ansprüche 8 bis 11, wobei Heizeinrichtungen im polymerischen Zwischenlagenmaterial oder in mindestens einer der mindestens zwei Glasscheiben integriert sind.

13. Verwendung einer Verbundglasscheibe gemäß einem der Ansprüche 8 bis 12 im Bauwesen oder im Bereich der Möbel.

**Claims**

1.  A method of coating a laminated glass panel comprising:

    - a laminated glass panel to be coated is provided, comprising at least two sheets of glass (11a, 11b) and in which at least two successive sheets of glass are assembled by means of a polymer interlayer material forming, after assembly, an interlayer (12), the laminated glass panel to be coated having at least one upper face (11a1) to be coated;
    - a fluid decorative material is provided;
    - a chemical hardener or a cross-linking catalyst is incorporated into the fluid decorative material in a ratio P_cata between the mass of the chemical hardener or cross-linking catalyst and the mass of the decorative material in the determined fluid state;
    - at least one decorative coating layer (13) is formed by applying the decorative material in the fluid state, in which the chemical hardener or the cross linking catalyst is incorporated, to the upper face (11a1) of the laminated glass panel to be coated;
    - the decorative coating layer is dried by heating the laminated glass panel thus coated by means of a drying system, the set point temperature (T_ext) of which is greater than or equal to 100°C and less than 140°C, method wherein the at least one decorative coating layer consists of a layer of reflective material in order to get a mirror and of one or more layers of protective varnish, the thickness of the layer of reflective material corresponding to a silver surface mass above the standard of 700 mg/m$^2$.

2.  A method of coating a laminated glass panel according to claim 1 wherein the polymer interlayer material is selected from polyvinyl butyral, ethylene vinyl acetate, an ionoplast polymer, thermoplastic polyurethane and a casting resin.

3.  Process for coating a laminated glass panel according to one of the preceding claims, in which the at least one decorative coating layer consists either of a layer of reflective material and one or more layers of protective varnish or of one or more layers of lacquer and optionally of one or more layers of protective varnish.

4.  Process for coating a laminated glass panel according to one of the preceding claims, in which the ratio P_cata of the mass of the chemical hardener or cross linking catalyst and the mass of the decorative material in the fluid state is greater than 0.1%.

5.  Process for coating a laminated glass panel according to one of the preceding claims in which:

    - if the set temperature of the drying system (T_ext) is chosen in the range [100°C, 120°C], said heating time (t_chauff) by means of the drying system is greater than or equal to 7.5 minutes and said ratio P_cata is chosen in the range [0.1% ; 5%] ,
    - and if the set point temperature of the drying system (T_ext) is chosen in the range [120°C, 140°C], said heating time (t_chauff) by means of the drying system is less than or equal to 7.5 minutes and greater than or equal to 3 minutes and said ratio P_cata is chosen in the range [0.1%; 5%].

6.  Process for coating a laminated glass panel according to one of the preceding claims, in which the chemical hardener or the cross linking catalyst is chosen from acid catalysts and optionally from hydrofluoric acid, phosphoric acid and para toluenesulphonic acid.

7.  Method according to any one of the preceding claims comprising a step in which the heating time (t_chauff) of the laminated glass panel at the set point temperature (T_ext) and/or the ratio P_cata of the mass of the chemical hardener or cross linking catalyst and of the mass of the decorative material in the fluid state during incorporation is determined depending on said set point temperature (T_ext).

8.  Laminated glass panel comprising at least two sheets of glass and in which at least two successive sheets of glass are assembled by means of a polymer interlayer material, the laminated glass panel having a first outer face (11a1) referred to as the upper face (11a1) and a second outer face (11b1) referred to as the lower face (11b1), the panel being **characterized in that** the upper face (11a1) of the laminated glass panel is coated with at least one decorative coating layer (13) formed at least in part from an organic fluid decorative material applied to the upper face (11a1) of the laminated glass panel after the at least two successive sheets of glass have been assembled by means of the polymer interlayer material and wherein the at least one decorative coating layer consists of a layer of reflective material in order to get a mirror and of one or more layers of protective varnish, the thickness of the layer of reflective material corresponding to a silver surface mass above the standard of 700 mg/m$^2$.

9. Laminated glass panel according to the preceding claim in which: the polymer interlayer material does not have any bubbling defects observable to the naked eye, and the decorative coating layer (13) withstands at least twenty passages of a rub test carried out by rubbing the surface of the decorative coating layer (13) over a determined distance using a cloth ) made of cellulose reinforced with polypropylene or polyester measuring 200 mm * 100 mm, the cloth being soaked in a solvent for the decorative coating layer (13) and having a contact surface area with the panel to be tested of 3 cm$^2$, back and forth across the surface of the panel over a distance of 5 cm at a speed of movement of between 15 m/min, the pressure exerted on the coating being controlled by means of a weight of 1 kg.

10. Laminated glass panel according to claim 9, the decorative coating layer (13) of which withstands at least two hundred rub-test passes.

11. A laminated glass panel according to any one of claims 8 to 10 in which the polymer interlayer material is tinted.

12. A laminated glass panel according to any one of claims 8 to 11 in which heating resources are incorporated in the polymer interlayer material or in at least one of the at least two sheets of glass.

13. Use of a laminated glass panel according to any one of claims 8 to 12 in the building or furnishing sector.

[Fig. 1]

[Fig. 2a]

[Fig. 2b]

[Fig. 3]

[Fig. 4]

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009081077 A